(19) Europäisches Patentamt
European Patent Office
Office européen des brevets

(11) Veröffentlichungsnummer: **0 171 707**
**A2**

(12) # EUROPÄISCHE PATENTANMELDUNG

(21) Anmeldenummer: **85109633.9**

(22) Anmeldetag: **31.07.85**

(51) Int. Cl.[4]: **C 08 G 73/16**

(30) Priorität: **11.08.84 DE 3429680**
**09.02.85 DE 3504481**

(43) Veröffentlichungstag der Anmeldung:
**19.02.86 Patentblatt 86/8**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Kricheldorf, Hans Rytger, Professor Dr.**
**Meitzelstrasse 10**
**D-2000 Hamburg 52(DE)**

(72) Erfinder: **Pakull, Ralf, Dipl.-Chem.**
**Memelerstrasse 3**
**D-2000 Hamburg 70(DE)**

(72) Erfinder: **Dicke, Hans-Rudolf, Dr.**
**Bodelschwinghstrasse 16**
**D-4150 Krefeld(DE)**

(54) **Verfahren zur Herstellung von Polyimidestern der Trimellitsäure.**

(57) Die Erfindung betrifft ein Verfahren zur Herstellung von Polyimidestern ausgehend von Trimellitsäureanhydrid und Aminophenolen bzw. Aminohydroxybiphenylen.

EP 0 171 707 A2

BAYER AKTIENGESELLSCHAFT 5090 Leverkusen, Bayerwerk
Konzernverwaltung RP
Patentabteilung Eck/ABc

# Verfahren zur Herstellung von Polyimidestern der Trimellitsäure

Die Erfindung betrifft ein Verfahren zur Herstellung von Polyimidestern ausgehend von Trimellitsäureanhydrid und Aminophenolen bzw. Aminohydroxybiphenylen.

Polyimidester sind bekannt. So werden z.B. in der US-PS 3 542 731, 4 383 105 und Makromol. Chem. 184, S. 1233-1229 (1983) Verfahren beschrieben, bei denen aus Trimellitsäureanhydrid und Aminophenol(estern) zuerst das monomere Trimellitsäureimid hergestellt wird, das dann unter Bedingungen einer Pyrrolyse ohne Lösungsmittel polymerisiert wird. Diese Verfahren haben jedoch den Nachteil, daß bei der Polymerisation auch Produkte entstehen können, die die Eigenschaften der entstandenen Polymeren ungünstig beeinflußen können.

Es wurde nun gefunden, daß man Trimellitsäure-Polyimidester erhält, die diese Nachteile nicht aufweisen, wenn man die Polymerisation in einem Lösungsmittel in Gegenwart eines Dehydratisierungsmittels durchführt.

Gegenstand der Erfindung ist daher ein Verfahren zur Herstellung von Homo- und Copolyestern von N-(Hydroxyaryl)trimellitsäureimiden, dadurch gekennzeichnet, daß Trimellitsäureanhydrid und ein Aminophenol in einem Lösungsmittel zur entsprechenden Trimellitamidsäure umgesetzt werden, und anschließend nach Zugabe eines hochsiedenden Umsetzungsmediums mit einem Dehydratisierungsmittel, gegebenenfalls in Gegenwart weiterer Comonomerer, cyclisiert und polykondensiert wird.

Im erfindungsgemäßen Verfahren können p-Aminophenole der Formel (1)

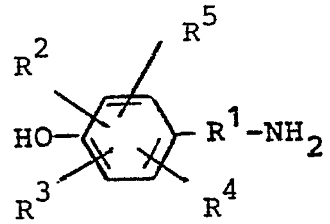

(1),

in welcher

$R^1$ für eine einfache Bindung, einen gegebenenfalls ein- bis 3-fach mit Halogen, wie Chlor und Brom, Alkyl mit 1 bis 3 C-Atomen substituierten Arylenrest mit 6 bis 10 C-Atomen steht und

$R^2$, $R^3$, $R^4$, $R^5$ unabhängig voneinander für Wasserstoff, einen Alkylrest mit 1 bis 3 C-Atomen oder Halogen wie Chlor oder Brom stehen,

sowie p-Aminophenole der Formel (2)

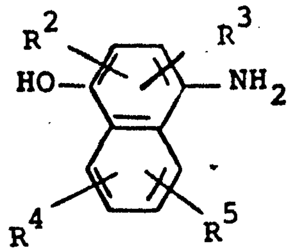

(2),

und der Formel (3)

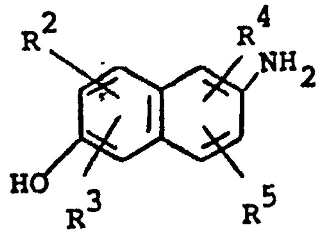

(3),

in welcher

$R^2$, $R^3$, $R^4$, $R^5$ die bei Formel (1) angegebene Bedeutung haben,

verwendet werden.

Beispielsweise können folgende Aminophenole der Formeln (1), (2) oder (3) verwendet werden:

4-Aminophenol, 4-Amino-2-methylphenol, 4-Amino-3-methylphenol, 4-Amino-2,3-dimethylphenol, 4-Amino-2,5-dimethylphenol, 4-Amino-2,6-dimethylphenol, 4-Amino-2-chlorphenol, 4-Amino-2,6-dichlorphenol, 4-Amino-3,5-dichlorphenol, 4-Amino-4'-hydroxybiphenyl, 4-Amino-1-hydroxynaphthalin, 2-Amino-6-hydroxynaphthalin, 4-Amino-2,3-dimethyl-1-hydroxynaphthalin, 4-Amino-2,3-dichlor-1-hydroxynaphthalin.

Als Lösungsmittel für die Umsetzung des Trimellitsäureanhydrids zur Amidsäure können verwendet werden:

Cyclische Ether wie Tetrahydrofuran, Dioxan, vorzugsweise Dioxan; Säureamide z.B. Dialkylcarbonamide wie Dimethylformamid, Dimethylacetamid; Lactone wie Butyrolacton, lineare Ether wie 1,2-Ethandioldimethylether, lineare Ester, wie Pivalinsäuremethylester, Nitrile wie Pivalonitril, Buttersäurenitril, polare aromatische Verbindungen wie Chlorbenzol, Benzonitril (auch in Gemische mit Pyridin).

Die Lösungsmittel können einzeln und im Gemisch miteinander verwendet werden.

Als Dehydratisierungsmittel bei der Cyclisierung und Dehydratisierung können Carbonsäureanhydride wie Acetanhydrid, Carbonsäurechloride wie Acetylchlorid, aromatische Chlorameisensäureester wie Chlorameisensäurephenylester, Carbonate wie Diphenylcarbonat, Phosphite wie Triphenylphosphit, Imidazolabkömmlinge wie Carbonyldiimidazol und Imidazolide der phosphorigen Säure, verwendet werden. Weiterhin können alle aliphatischen Anhydride von Säuren die $< 200°C$ sieden, z.B. Propionsäure, Buttersäure, Hexansäureanhydrid und gemischte Anhydride wie Ameisensäure-Essigsäureanhydrid, ferner alle Carbonsäurechloride mit Siedepunkten der Säuren $< 200°C$: z.B. Pivalinsäurechlorid, Chlorameisensäurealkylester verwendet werden.

Vorzugsweise werden Acetanhydrid, Acetylchlorid und Chlorameisensäurephenylester verwendet.

Als hochsiedendes Umsetzungsmedium für die Cyclisierung und Dehydratisierung eignen sich Polyphenyle, z.B. Terphenyl, benzylierte Benzole wie Gemische isomerer Di- und Tribenzylbenzole (Marlotherm-S®), Sulfone wie Diphenylsulfon, substituierte Diphenylether wie 4,4'-Dichlordiphenylether, 2-Phenylnaphthalin, 4,4'-Dichlordiphenylmethan.

Als Comonomere, die gegebenenfalls bei der Durchführung des erfindungsgemäßen Verfahrens zugegeben werden, können substituierte und unsubstituierte 4-Hydroxybenzoesäuren, p-Dihydroxybenzol, 4,4'-Dihydroxydiphenyl oder 2,6-Dihydroxynaphthalin, bzw. deren Gemische sowie Dicarbonsäuren wie Terephthalsäure, 2,6-Naphthalindicarbonsäure und 1,4-Cyclohexandicarbonsäure bzw. deren Gemische verwendet werden. Im allgemeinen werden die Bishydroxyverbindungen und die Dicarbonsäuren im etwa äquimolaren Verhältnis von 0,9:1 bis 1:0,9 eingesetzt.

Bei der Durchführung des erfindungsgemäßen Verfahrens kann die Umsetzung des Trimellitsäureanhydrids mit dem p-Aminophenol der Formel (1), (2) oder (3) zur Amidsäure im Lösungsmittel bei einer Temperatur von 40 bis 150°C, vorzugsweise 60 bis 100°C, durchgeführt werden.

Bei der Cyclisierung und Dehydratisierung der Amidsäure, gegebenenfalls in Gegenwart weiterer Comonomerer, im hochsiedenden Lösungsmittel wird auf Temperaturen von 200-400°C, vorzugsweise 240 bis 380°C, besonders bevorzugt 340-360°C, erhitzt. Bei dieser Reaktion ist es vorteilhaft unter einer Inertgasatmosphäre (z.B. Stickstoff, Argon) zu erhitzen. Anwendung von einem geringen Überdruck bis zu 5 bar kann in besonderen Fällen vorteilhaft sein.

Bei der Durchführung des erfindungsgemäßen Verfahrens wird das Trimellitsäureanhydrid und das p-Aminophenol der Formel (1) im Lösungsmittel vorgelegt und ein für diese Umsetzung üblicher Katalysator in üblichen Mengen zugegeben, und dann wird das Gemisch für 10 bis 60 Minuten bei einer Temperatur von 60 bis 120°C gerührt. Anschließend wird das Dehydratisierungsmittel zugegeben und weitere 10 bis 60 Minuten bei einer Temperatur von 60 bis 120°C gerührt. Nach Zugabe des hochsiedenden Lösungsmittels wird innerhalb von etwa einer Stunde die Temperatur unter Überleitung von Inertgas auf 200-400°C gesteigert. Tiefersiedende Komponenten destillieren dabei im Inertgasstrom ab. Anschließend wird noch für einen Zeitraum von 10 bis 20 Stunden diese Temperatur unter Inertgas aufrechterhalten. Nach Abkühlen auf Raumtemperatur kann dann das Polymere auf übliche Art, beispielsweise durch Zugabe eines Verdünnungsmittels wie Aceton, isoliert werden.

Die Zugabe von Comonomeren, wie z.B. p-Hydroxybenzoesäure kann vor der Cyclisierung zur Amidsäure oder nach der Cyclisierung erfolgen, vorteilhaft nach Bildung der Amidsäure.

Im allgemeinen wird das Dehydratisierungsmittel für jedes Mol an zusätzlichen, aus OH und $CO_2H$-Gruppen, die zusätzlich aus dem zugesetzten Comonomeren stammen, äquimolar zudosiert.

Nach Abfiltrieren und Waschen mit heißem Verdünnungsmittel (z.B. Aceton) kann dann das Polymere getrocknet werden (z.B. bei 100°C/12 mbar).

Das erfindungsgemäße Verfahren unterscheidet sich von bekannten Verfahren vorteilhaft:

a) die Ausführung kann im Eintopfverfahren durchgeführt werden, welches die aufwendige Isolierung und Reinigung von Monomeren Zwischenstufen wie z.B. der Hydroxyphenylamidsäure, Hydroxyphenylimidsäure, Acetoxyphenylimidsäure überflüssig macht,

b) eine große Zahl von Dehydratisierungs(Kondensations)mitteln ist verwendbar,

c) Comonomere können bei der Polykondensation zugegen sein.

Zur Erreichung hochmolekularer Polyester (z.B. $\overline{DP} > 50$ $\overline{M}n$ 15 000) sind Temperaturen $> 300°C$, vorzugsweise 340 - 360°C, vorteilhaft (s. Tab. 1).

Das Verfahren kann in einer besonderen Variante auch so durchgeführt werden, daß zunächst in dem genannten Eintopfverfahren bei niedriger Temperatur (250 - 300°C) Oligoester hergestellt werden und diese nach Abdestillieren eines $\leq 300°C$ siedenden Reaktionsmediums (z.B. Chlornaphthalin) in fester Phase bei 340 - 360°C weiterkondensiert werden, wobei direkt ein trockenes Kristallpulver anfallen kann.

Die erfindungsgemäß hergestellten Polymeren eignen sich vorteilhaft auch zum Einsatz auf Gebieten, in denen bisher z.B. Poly(4-oxybenzoate) eingesetzt werden können. Das Polymer eignet sich vorteilhaft für die Bildung von Plasmasprayüberzügen oder für die Herstellung von thermisch stabilen dreidimensionalen hoch beanspruchbaren Artikeln durch Formpressen oder Spritzgießen.

Repräsentative Spritzgußartikel können durch Zusammenpressen des fein pulverisierten Polymerpulvers bei einem Druck von 70 bis 210 bar bei einer Temperatur von 340 bis 440°C hergestellt werden. Viele andere Sintertechniken können ebenfalls herangezogen werden um strapazierfähige Artikel aus dem erfindungsgemäßen hergestellten Polymeren anzufertigen.

Füllstoffe und/oder Verstärkungsmittel können gegebenenfalls mit dem erfindungsgemäß hergestellten Polymer abgemischt werden in einer Menge von 1 bis 60 Gew.-% der resultierenden Mischung.

Als Füll- und Verstärkungsmittel können beispielsweise verwendet werden Fasern aus Glas, Asbest, Graphit-Kohlenstoff, amorphem Kohlenstoff, synthetischen Polymeren, Aluminium, Aliminiumsilikat, Aluminiumoxid, Titan, Magnesium, Steinwolle, Stahl, Wolfram, Baumwolle und Holzcellulose. Gegebenenfalls können die Fasern vorbehandelt werden um z.B. die Adhäsion zum Polymer zu verbessern.

Als Füllstoffe können weiterhin z.B. Calciumsilikate, Silica, Tonerde, Talkum, Glimmer(schiefer), Polytetra-

fluorethylen, Graphit, Aluminiumoxidtrihydrat, Natriumaluminiumcarbonat und Bariumferrit verwendet werden.

Farbstoffe und Pigmente können ebenfalls zugegeben werden.

Die erfindungsgemäß hergestellten Polymere können legiert oder gemischt werden mit z.B. Polymeren wie Polytetrafluorethylen um Materialien herzustellen, die besonders geeignet sind um z.B. langlebige Tragebehälter, Verpackungsmaterialien "O"-Ringverschlüße, Kompressorringverschlüße, Schnappfederverschlüße, Kolbenringe etc. herzustellen. Sie können auch mit Aluminium oder Bronze kombiniert werden um hochabriebfeste Überzüge herzustellen.

Die erfindungsgemäß hergestellten Polymeren eignen sich auch zur Herstellung von Elektrobauteilen und elektronischen Komponente, die hohen Temperaturen und Belastungen standhalten müssen.

Beispiel 1 (No. 1. Tab. 2)

19,2 g (0,1 mol) umkristallisiertes Trimellitsäureanhydrid werden in 40 ml trockenem Dimethylformamid gelöst und bei ca. 80°C die Lösung von 10,9 g (0,1 mol) 4-Aminophenol und 1,5 ml Pyridin 40 ml in warmen Dimethylformamid zulaufen gelassen. Das Gemisch wird 20 min bei 80 - 100°C gerührt, dann werden 25 ml (0,26 mol) Acetanhydrid zugegeben und weitere 20 min bei 80 - 100°C gerührt. Danach wird mit 250 ml Marlotherm-S verdünnt und im Lauf von ca. 1 h auf 350°C erhitzt, wobei Essigsäure und Dimethylformamid in schwachem Stickstoffstrom abgetrieben werden. Das Reaktionsgemisch wird noch 16 h bei 350°C gerührt, nach dem Abkühlen mit Aceton verdünnt und das auskristallisierte Produkt abfiltriert. Nach Waschen mit heißem Aceton wird der Polyester bei 100°C/12 mbar getrocknet.

Beispiel 2 (No. 3. Tab. 2)

19,2 g (0,1 mol) Trimellitsäureanhydrid werden bei 80°C in 35 ml Dioxan gelöst, eine Suspension von 10,9 g (0,1 mol) 4-Aminophenol in 35 ml heißem Dioxan zugegeben und das Gemisch 30 min zum Rückfluß erhitzt. Nach Abkühlen auf ca. 50°C werden 20 g (0,25 mol) Acetylchlorid zugegeben und nochmals 30 min zum Rückfluß erhitzt. Dann wird der Ansatz mit 250 ml Marlotherm-S verdünnt und innerhalb 1 h auf 350°C erhitzt, wobei HCl, Essigsäure und Dioxan im schwachen Stickstoffstrom abdestilliert werden. Nach 17 h bei 350°C wird abgekühlt, mit Aceton verdünnt, das auskristallisierte Produkt abfiltriert,

mit Aceton gewaschen und bei 100°C/12 mbar getrocknet.

Beispiel 3 (Cocondensation)

19,2 g (0,1 mol) Trimellitsäureanhydrid werden in 50 ml trockenem Dioxan bei 80-90°C gelöst, eine Suspension von 10 g (0,1 mol) 4-Aminophenol in 50 ml heißem Dioxan sowie 1 mol Pyridin zugegeben und das Gemisch 30 min zum Rückfluß erhitzt. Dann werden 27,6 g 4-Hydroxybenzoesäure (0,2 mol) mit 52 ml (0,5 mol) Acetanhydrid zugegeben und 30 min zum Sieden erhitzt. Danach wird das Gemisch mit 250 ml Marlotherm-S verdünnt und im Laufe von 1 h auf 350°C erhitzt, wobei Dioxan und Essigsäure im schwachen Stickstoffstrom abdestilliert werden. Nach 17 h bei 350°C wird abgekühlt, mit Aceton verdünnt, das auskristallisierte Produkt abfiltriert, mit Aceton gewaschen und bei 100°C/12 mbar getrocknet: Ausbeute 81 %; DP  100.

Beispiel 4 (Cocondensation)

19,2 g (0,1 mol) Trimellitsäureanhydrid werden in 50 ml heißem Dioxan gelöst, mit einer Suspension von 10,9 g (0,1 mol) 4-Aminophenol in 50 ml heißem Dioxan versetzt und nach Zugabe von 1 ml Pyridin 30 min zum Rückfluß erhitzt. Dann werden 17,2 g (0,1 mol) trans-1,4-Cyclohexandicarbonsäure, 10,9 g (0,1 mol) Hydrochinon und 52 ml (0,5 mol) Acetanhydrid zugegeben und das resultierende Gemisch wieder 30 min zum Rückfluß erhitzt.

Danach wird mit 250 ml Marlotherm-S verdünnt und im Lauf von 1 h auf 350°C erhitzt, wobei Dioxan und Essigsäure im schwachen Stickstoffstrom abdestilliert werden. Nach weiteren 17 h bei 350°C wird abgekühlt, mit Aceton verdünnt, das auskristallisierte Produkt abfiltriert, mit Aceton gewaschen und bei 100°C/12 mbar getrocknet: Ausbeute: 86 %.

Tabelle 2 Synthese von Poly-N-(4-hydroxyphenyl)trimellitsäureimidestern aus 4-Aminophenol a) und Trimetllitsäureanhydrid in einer "Eintopfreaktion" (Temp. = 350°C; Dauer = 18 h)

| Nr. | Kondensations-mittel | Umsetzungs-medium | Ausbeute (%) | DP c) | Summenformel (Molgewicht) | | Analyse C | H | N |
|---|---|---|---|---|---|---|---|---|---|
| | | | | | | Ber. | 67,95 | 2,66 | 5,28 |
| 1 | Acetanhydrid | Dimethylformamid Marlotherm-S | 68,0 | 90 | $(C_{15}H_7NO_4)_n$ $(265,2)_n$ | Ber. | 68,8 | 2,95 | 5,20 |
| 2 | Acetanhydrid | Dioxan Marlotherm-S | 91,0 | 100 | " | " | 69,5 | 3,00 | 5,19 |
| 3 | Buttersäure | Dioxan Marotherm-S | 89,0 | 35 | " | " | 68,4 | 2,88 | 5,00 |
| 4 | Acetylchlorid | Dioxan Marlotherm-S | 90,5 | 70 | " | " | 68,8 | 2,84 | 5,21 |
| 5 | Phenyl-chloroformiat | Dioxan Marlotherm-S | 84,0 | - | " | " | 68,9 | 2,97 | 5,00 |
| 6 | Diphenylcarbonat | Dioxan Marlotherm-S | 87,5 | - | " | " | 69,5 | 3,07 | 4,95 |
| 7 | Acetanhydrid a) | Dioxan Marlotherm-S | 42,5 | 110 | $(C_{15}H_5Cl_2NO_4)_n$ $(334,1)_n$ | Ber. gefunden | 53,9 | 1,51 | 4,19 |

a) in Nr. 7 wurde 2,6-Dichlor-4-aminophenol eingesetzt

b) nach Extraktion mit Aceton und Methylenchlorid

c) $^1$H NMR Endgruppenbestimmung; Fehlergrenze ca. ± 10

Tabelle 1: Kondensation von N-(4-acetoxyphenyl)trimellitsäure

| Nr. | Reaktions-Medium | Temp. (°C) | Dauer (n) | Ausbeute (%) | DP |
|---|---|---|---|---|---|
| 1 | Marlotherm-S | 250 | 18 | 97,7 | 2.7±0.2 |
| 2 | Marlotherm-S | 300 | 18 | 97,7 | 5.5±0.5 |
| 3 | Marlotherm-S | 350 | 18 | 91,0 | 55.0±5.0 |
| 4 | Terphenyl | 300 | 18 | | |
| 5 | Diphenyl | 300 | 18 | 95,8 | 10.0±1.0 |
| 6 | — | 300 | 2 | 92,0 | 2.3±0,2 |
| 7 | — [a)] | 375 | 8 | 80,5 | 50.0±5.0 |

a) das trockene Oligomere der Kondensation-Nr. 2 wurde unter einem leichten Stickstoffstrom erhitzt.

## Patentansprüche

1. Verfahren zur Herstellung von Homo- und Copolyestern von N-(Hydroxyaryl)trimellitsäureimiden, dadurch gekennzeichnet, daß Trimellitsäureanhydrid und ein Aminophenol in einem Lösungsmittel zur entsprechenden Trimellitamidsäure umgesetzt werden, und anschließend nach Zugabe eines hochsiedenden Umsetzungsmediums mit einen Dehydratisierungsmittel, gegebenenfalls in Gegenwart weiterer Comonomerer, cyclisiert und polykondensiert wird.

2. Verfahren nach Anspruch 1, dadurch gekennzeichnet, daß ein Amin der Formel (1), (2) oder (3)

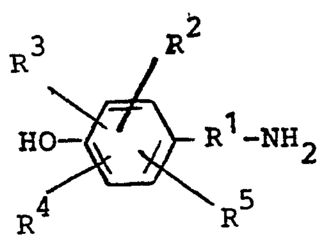

(1)

in welcher

$R^1$ für eine einfache Bindung, einen gegebenenfalls ein bis 3-fach mit Halogen, Alkyl mit 1 bis 3 C-Atomen substituierten Arylenrest mit 6 bis 10 C-Atomen steht und

$R^2$, $R^3$, $R^4$, $R^5$ unabhängig voneinander für Wasserstoff, einen Alkylrest mit 1 bis 3 C-Atomen oder Halogen wie Chlor oder Brom stehen,

der Formel (2)

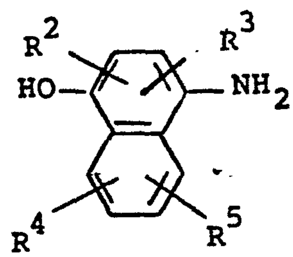

(2),

in welcher

$R^2$, $R^3$, $R^4$, $R^5$ die bei Formel (1) angegebene Bedeutung haben,

und/oder der Formel (3)

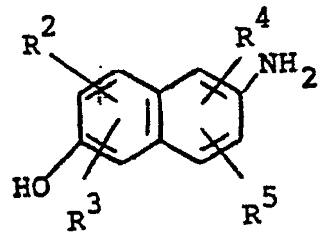

(3),

in welcher

$R^2$, $R^3$, $R^4$, $R^5$ die bei Formel (1) angegebene Bedeutung haben,

verwendet wird.

3. Verfahren nach Anspruch 1, dadurch gekennzeichnet, daß die Comonomeren nach Bildung der Amidsäure zugegeben werden.